# EUROPÄISCHE PATENTSCHRIFT

(11) **EP 0 444 182 B1**
(45) Veröffentlichungstag und Bekanntmachung des Hinweises auf die Patenterteilung: **17.04.1996**
(21) Anmeldenummer: 90914157.4
(22) Anmeldetag: 29.08.1990
(51) Int. Cl.: A61C 5/10, A61C 13/00

(54) **VERFAHREN ZUR HERSTELLUNG EINER ZAHNRESTAURATION MIT HILFE ZWEIER SONOTRODEN**
PROCESS FOR PRODUCING A TOOTH CROWN WITH THE AID OF TWO SONOTRODES
PROCEDE DE PREPARATION D'UNE RESTAURATION DENTAIRE AU MOYEN DE DEUX SONOTRODES

(30) Priorität: 30.08.1989 DE 3928684
(43) Veröffentlichungstag der Anmeldung: 04.09.1991
(73) Patentinhaber: THERA Patent GmbH & Co. KG Gesellschaft für industrielle Schutzrechte, D-82229 Seefeld (DE)
(72) Erfinder: Hahn, Rainer, Dr.med.dent., D-72108 Rottenburg (DE)
(74) Vertreter: Strehl Schübel-Hopf Groening & Partner
(86) Internationale Anmeldenummer: EP9001438
(87) Internationale Veröffentlichungsnummer: WO9103211

(56) Entgegenhaltungen:
- EP-A- 0 030 850
- DE-A- 3 544 123
- DE-C- 3 735 558
- DE-U- 8 814 470
- US-A- 3 971 133

## Beschreibung

Die Erfindung betrifft ein Verfahren zur Herstellung einer Zahnrestauration durch Ultraschallbearbeitung gemäß dem Oberbegriff des Patentanspruchs 1.

Ein derartiges Verfahren ist aus der US-A-3 971 133 bekannt, bei dem Abdrücke des mit der Zahnrestauration zu versehenden Zahnstumpfes sowie der gegenüberliegenden Zähne angefertigt werden und durch Beschichten mit Weichmetall, Ausfüllen mit Kunststoff und Entfernen des Abdruckes daraus zu Sonotroden geformt werden.

Anschließend muß aus einem vorbereiteten Satz von Vorformen eine am besten passende Porzellan-Wachs-Vorform vom Zahnarzt auf den Zahnstumpf gesetzt und geformt werden, wonach ein dritter Abdruck mit aufgesetzter Vorform genommen wird und beim Entfernen des Abdruckes die Porzellan-Wachs-Vorform mitgenommen wird. Danach wird aus einem Satz von Keramikrohlingen ein dem eingesetzten Keramik-Wachs-Rohling entsprechender Keramikrohling ausgewählt und in den Abdruck eingesetzt.

Sodann erfolgt eine sonoerosive Bearbeitung des Keramikrohlings von der Zahnstumpfseite. Schließlich wird der einseitig bearbeitete Rohling auf die als Halterung dienende erste Sonotrode gesteckt und von der Gegensonotrode fertig bearbeitet, wobei keine umfassende formgebende Bearbeitung der Okklusionsfläche der Zahnrestauration vorgenommen wird.

Aus der DE 35 44 123 A1 ist ein funkenerosives Verfahren zur Bearbeitung elektrisch leitender Zahnrestaurationen bekannt, wodurch die Materialauswahl für die Restauration sehr eingeschränkt ist und insbesondere keramische Werkstoffe nicht bearbeitet werden können.

Ausgehend von der US-A-3 971 133 liegt der vorliegenden Erfindung die Aufgabe zugrunde, ein gattungsgemäßes Herstellungsverfahren für Zahnrestaurationen anzugeben, das sich durch eine einfache, schnelle und wirtschaftliche Herstellung von vorzugsweise keramischen Zahnersatzteilen ermöglicht.

Erfindungsgemäß wird diese Aufgabe durch die im Patentanspruch 1 angegebenen Merkmale gelöst.

Mit der Erfindung können auch räumlich komplizierte Paßkörper wirtschaftlich hergestellt werden. Damit ist auch die Anfertigung von Einzelstücken zu überschaubaren Kosten möglich. Als weiterer Vorteil ist anzusehen, daß sprödharte Materialien bearbeitet werden können. Bei dieser Bearbeitung ist eine außerordentlich hohe Genauigkeit erzielbar.

Durch die in den Unteransprüchen aufgeführten Maßnahmen sind vorteilhafte Weiterbildungen und Verbesserungen der in den Hauptansprüchen angegebenen Erfindung möglich.

Besonders vorteilhaft ist, daß der Sonotrodenkörper aus einem verhältnismäßig preisgünstigen und einfach zu verarbeitenden Material, wie Gips oder Zement oder thermoplastischem oder aushärtbarem Kunststoff, hergestellt werden und daß die Werkzeugkrone, also die bei der Bearbeitung des Werkstücks unmittelbar aktive Fläche, in einem anderen, nämlich harten und die Wärme ableitenden, Material wie Metall ausgeführt werden kann.

Die Werkzeugkrone erstreckt sich über die gesamte Stirnfläche der Sonotrode, damit sind die äußeren Abmessungen des rohen Werkstücks ohne Belang. Durch eine waagrechte Vorschubführung der Sonotrode läßt sich ein zügiges Auswerfen des abgearbeiteten Materials und eine gute Kühlung der Sonotrode erzielen.

Mit der erfindungsgemäßen Vorrichtung können industriell gefertigte und natürlich vorkommende hochwertige Materialien bearbeitet werden. Die Kenndaten dieser Materialien können an den Forderungen des Verbrauchers ausgerichtet werden, die Dotierung, die Verstärkung mit eingelegten Fasern und anderes können vorgegeben werden. Selbst die Farbe kann vor der Bearbeitung, nämlich schon bei der Herstellung des Grundmaterials, ausgewählt werden.

Erfindungsgemäß ist es weiter möglich, geschichtete Werkstücke zu bearbeiten. Dies bedeutet beispielsweise in der Zahntechnik, daß vor einer Bearbeitung eines Werkstücks mit der erfindungsgemäßen Vorrichtung eine bestimmte Schichtung von Dentin- und Transparenzmaterial und auch die Position von Einschlüssen und Farbverläufen vorgesenen werden kann.

In vorteilhafter Weise können zu einer allseitigen Bearbeitung des Werkstücks zwei Sonotroden, die aufeinander zu bewegt werden, eingesetzt werden.

Bei den zwei Sonotroden, die zur Bearbeitung des Werkstücks verwendet werden, ist es vorteilhaft, eine der Sonotroden schüsselförmig und die andere stempelförmig auszubilden und durch zweckmäßig ausgebildete Randbereiche der Sonotroden eine formschlüssige Führung der Sonotroden während ihres Vorschubs zu ermöglichen.

Mit dem erfindungsgemäßen Verfahren ist es in vorteilhafter Weise möglich, das Werkstück gegebenenfalls in mehreren Arbeitsgängen beliebig fein zu bearbeiten. So kann das Werkstück zunächst mit einem grobkörnigen Schleifmittel geschruppt und dann mit einem feinkörnigen Schleifmittel geschlichtet werden, auf die gleiche Weise ist in einem letzten Arbeitsgang mit einem geeigneten Schleifmittel eine Hochglanzpolitur möglich. Damit läßt sich eine beliebig gute Oberflächenbeschaffenheit erreichen.

Mit dem Verfahren nach der Erfindung kann außerdem eine beliebig hohe Paßgenauigkeit erzielt werden. Weiter lassen sich am Werkstück scharfe Winkel und spitz auslaufende Ränder herstellen. Damit ist ein optimaler Anschluß des hergestellten Paßkörpers an die Unterlage möglich. In der Zahntechnik heißt dies, daß die Füllung oder die Krone nahtlos, also ohne Stoßkanten und ohne Spalten, an den Zahn angefügt oder in den Zahn eingesetzt werden kann.

Da eine allseitige Bearbeitung des Werkstücks mit beliebig hoher Oberflächengüte möglich ist, kann in der Zahntechnik auch die Okklusionsfläche, also die Kaufläche, bereits bei der Bearbeitung des Werkstücks hergestellt werden. Ein Nacharbeiten ist nicht mehr erforderlich.

Durch das erfindungsgemäße Verfahren lassen sich Materialien bearbeiten, die bisher einer Verwendung nicht zugänglich waren, beispielsweise Zirkonoxyde. Bei der erfindungsgemäßen Vorrichtung werden bereits fertige Materialien bearbeitet, denn das Sintern oder Gießen und das Brennen sind ja schon abgeschlossen. Bei der Bearbeitung gibt es daher keine Volumenänderungen mehr, innere Spannungen treten nicht mehr auf.

Weitere Merkmale und Vorteile ergeben sich aus der Beschreibung der Ausführungsbeispiele im Zusammenhang mit der Zeichnung, in der einzelne Ausführungsbeispiele schematisch dargestellt sind.

Die Erfindung soll nicht auf die Ausführungsbeispiele beschränkt sein, sie soll sich vielmehr auf alle Abänderungen und Ausgestaltungen, die durch die Ansprüche und die offenbarten Merkmale abgedeckt sind, erstrecken.

Ausführungsbeispiele der Erfindung sind in der Zeichnung dargestellt und in der nachfolgenden Beschreibung näher erläutert. In der Zeichnung zeigen:
- Fig. 1a bis 1e: Beispiele für Einlagefüllungen und Kronen, wie sie mit der erfindungsgemäßen Vorrichtung hergestellt werden können;
- Fig. 2: einen defekten Zahn mit einem Abdruck;
- Fig. 3: ein Arbeitsmodell mit einer Doublierung;
- Fig. 4: eine beschichtete Doublierung;
- Fig. 5: eine beschichtete Sonotrode;
- Fig. 6: den Aufbau einer Restauration (skizziert);
- Fig. 7: eine danach hergestellte zweite Sonotrode;
- Fig. 8: den Aufbau einer Form für eine Vollkrone (angedeutet);
- Fig. 9: eine Zusammenstellung von zwei Sonotroden und einem Werkstück.

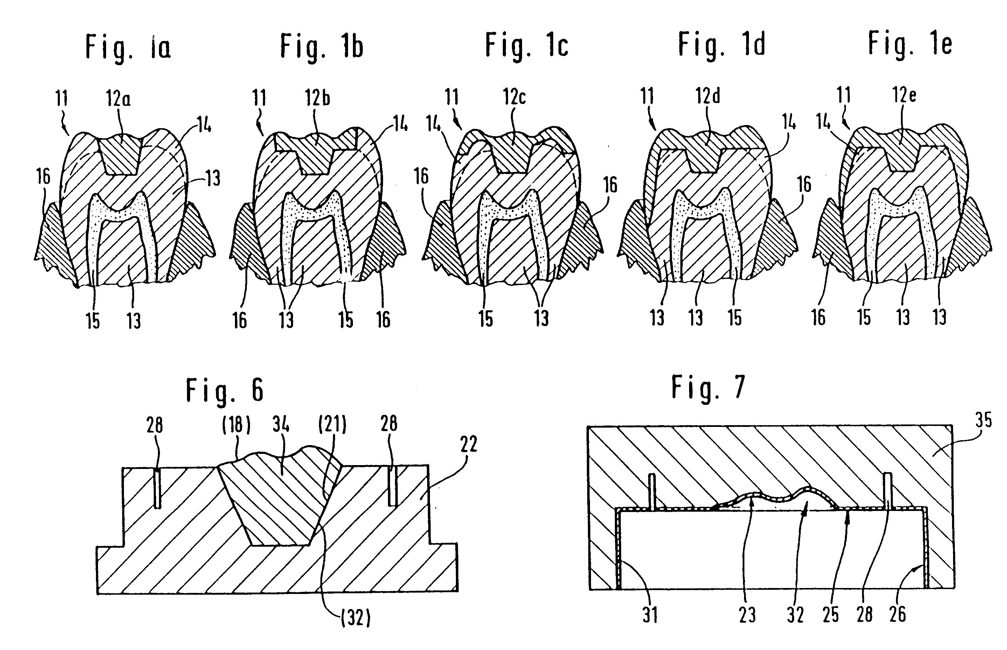

In Figur 1 ist ein Zahn 11 mit einer Restauration 12 gezeigt. Der Zahn besteht hauptsächlich aus Zahnbein 13; die Zahnkrone besteht aus Zahnschmelz 14. Über das Zahnmark 15 wird der Zahn 11 mit Aufbaustoffen versorgt. Umgeben ist der Zahn 11 von Zahnfleisch 16. In den Figuren 1a bis 1c sind schematisch Einlagefüllungen dargestellt, und zwar zeigt Figur 1a ein Inlay, Figur 1b ein Onlay und Figur 1c ein Overlay. In der Figuren 1d und 1e sind Beispiele für Kronen gezeigt, Figur 1d soll eine Teilkrone und Figur 1e eine Vollkrone darstellen. Alle diese Restaurationen 12 können als Paßkörper mit der erfindungsgemäßen Vorrichtung hergestellt werden.

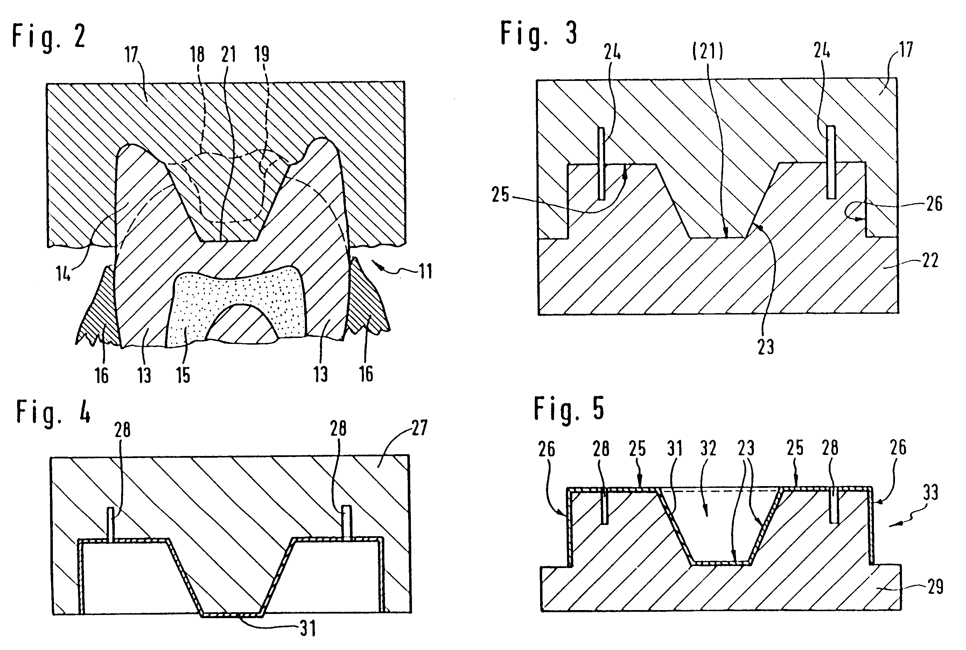

In Figur 2 ist die Herstellung eines ersten Abdrucks 17 von einem defekten Zahn 11 schematisch dargestellt. Gleiche Teile sind mit den gleichen Bezugszeichen wie in Figur 1 versehen. Die ursprüngliche Kaufläche des Zahns 11 ist mit der Linie 18 angedeutet. Der tatsächliche Defekt, also das Loch im Zahn, wie es der Zahnarzt vorfindet, ist mit der gestrichelten Linie 19 angegeben. Den präparierten Defekt, die Vorbereitung für die Füllung, zeigt die ausgezogene Linie 21.

Von der präparierten Kavität 21 wird nun der Abdruck 17 mit bekannten Mitteln angefertigt. Die Arbeiten gemäß Figur 2 finden im Mund des Patienten statt.

Als nächstes wird, wie Figur 3 zeigt, der erste Abdruck 17 abgeformt und ein - positives - Arbeitsmodell 22 angefertigt. In einem wesentlichen Teil 23, der später der Formgebung dient, entspricht das Arbeitsmodell 22 dimensionsgenau der präparierten Kavität 21. Das Arbeitsmodell 22 ist gegenüber dem Abdruck 17 zweckmäßigerweise mit Hilfe von Paßstiften 24 zentriert.

An den späteren Arbeitsbereich 23 des Arbeitsmodells 22 schließt sich ein Randbereich 25 an. Stellt man sich das Arbeitsmodell 22 in horizontaler Lage vor, so verläuft der Randbereich 25 vorzugsweise in einer horizontalen Ebene. Der Randbereich 25 wird durch dann senkrecht verlaufende Seitenflächen 26 abgeschlossen.

Vom Arbeitsmodell 22 wird nun ein Negativ 27 angefertigt. Diese Doublierung 27 enthält Löcher 28 für Paßstifte 24. Alle Arbeiten von Figur 3 an erfolgen selbstverständlich außerhalb des Munds des Patienten.

Durch ein Abformen des Negativs 27 erhält man den Sonotrodenkörper 29. Der Sonotrodenkörper kann auf einfache Weise aus einem mineralischen Stoff wie Gips oder Zement angefertigt werden, er kann aber statt dessen auch aus thermoplastischem oder aus härtbarem oder gefülltem Kunststoff hergestellt sein. Aber auch eine Mischung dieser Stoffe oder irgend ein anderer Stoff kann verwendet werden. Vorzugsweise wird jedoch ein Stoff verwendet, der nicht schrumpft oder im Verlauf seiner Bearbeitung Materialspannungen bekommt. Damit soll erreicht werden, daß auch bei diesem Verfahrensschritt die Originalmaße der präparierten Kavität 21 erhalten bleiben. An seiner Oberfläche wird der Sonotrodenkörper 29 mit einer Schicht 31 versehen. Diese Schicht soll möglichst verschleißfest sein, weil sie als Werkzeugkrone 32 dient. Des weiteren soll die Schicht 31 gut wärmeleitend sein, da sie die bei der Sonoerosion entstehende Wärme verteilen und abführen soll. Vorzugsweise besteht die Schicht 31 aus Metall oder aus einer Metallegierung. Die Metallschicht 31 kann nach einem der bekannten Verfahren aufgalvanisiert, aufgespritzt oder aufgedampft sein. Der Sonotrodenkörper 29 und die Schicht 31 zusammen bilden die Sonotrode 33.

Bei der Herstellung der Sonotrode 33 kann es günstiger sein, die Schicht 31 bereits auf das Negativ 27 aufzubringen und später auf den Sonotrodenkörper 29 zu übertragen. Die Schicht 31 ist daher auch schon in der vorangehenden Figur 4 eingezeichnet.

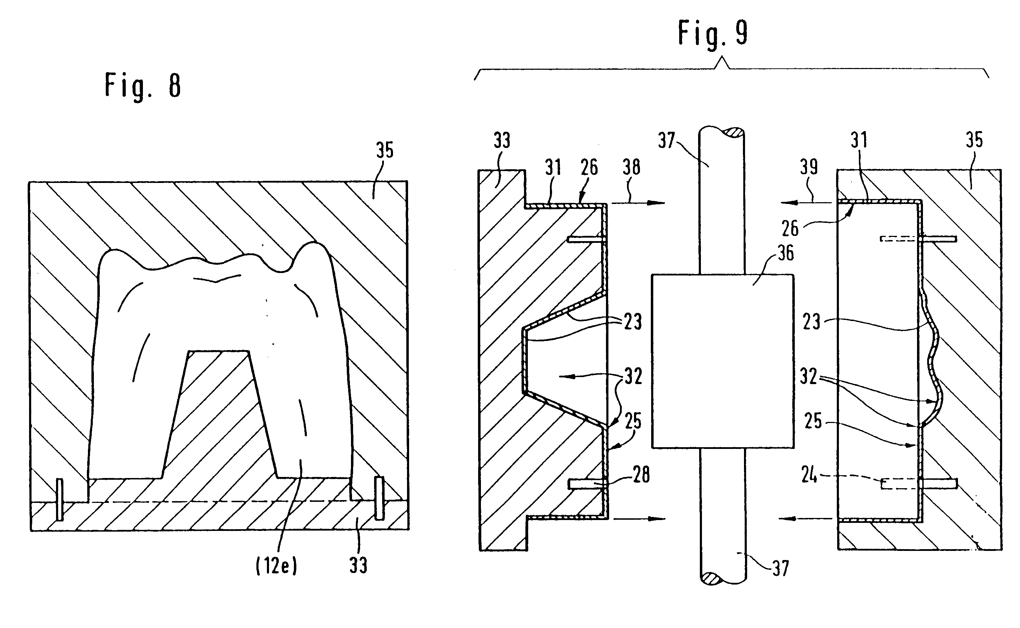

In Figur 6 ist zunächst wieder das pos. Arbeitsmodell 22 gezeigt. In den späteren Arbeitsbereich 23 der Sonotrode 33 wird nun ein Modell 34 der späteren Restauration 12 aufgebaut. Der im Arbeitsbereich 23 liegende Teil des Modells 34 entspricht dabei der präparierten Kavität 21 des Zahns 11, die frei liegende Oberfläche des Modells 34 entspricht der zu restaurierenden Kaufläche 18 des Zahns 11. Als Verbrauchsmaterial kann beispielsweise Wachs oder ein für sich bekanntes plastisches rückstandslos verbrennendes Material verwendet werden.

Das Arbeitsmodell wird nun mit der Schicht überzogen, oder aber es wird gleich - wie in Figur 7 gezeigt - eine zweite Sonotrode 35 angefertigt und diese zweite Sonotrode 35 mit der Schicht 31 versehen. Nach der Fertigstellung der zweiten Sonotrode 35 ist vom Modell 34 der Restauration 12 nur noch der Arbeitsbereich 23 der zweiten Sonotrode 35 übriggeblieben. Der Arbeitsbereich 23 wird auch hier wieder, wie bei der ersten Sonotrode 33, von der als Werkzeugkrone 32 dienenden Schicht 31 begrenzt.

In Figur 8 ist schematisch dargestellt, wie eine Vollkrone 12e mit Hilfe einer ersten Formsonotrode 33 und einer zweiten Formsonotrode 35 hergestellt werden kann. Die beiden Sonotroden 33, 35 sind der Deutlichkeit halber ohne ihre Beschichtung 31 gezeigt.

In Figur 9 ist das Beispiel, das den Figuren 2 bis 7 zugrundelag, fortgeführt. Figur 9 zeigt die Herstellung eines Paßkörpers 12a mit Hilfe zweier Sonotroden 33 und 35 aus einem Werkstück 36. Das Werkstück 36 ist vorzugsweise ein serienmäßig vorgefertigtes Teil aus hochwertigem Keramikmaterial. Da das Werkstück 36 außerhalb des Zahnlabors hergestellt wurde, ist es einerseits frei von Lunkern und Spannungen, andererseits aber in einer vorgegebenen Weise aufgebaut. Dabei können beispielsweise die Materialart, die Farbe und die Materialgüte vorgegeben werden. Zusätzlich kann vorher eine Schichtung verschiedener Materialien oder Farben oder Härtegrade bestimmt werden. Selbstverständlich können alle weiteren Wünsche, die im Rahmen der Möglichkeiten des Herstellers des Werkstoffs für das Werkstück 36 liegen, erfüllt werden. In der Zahntechnik kann so die spätere Restauration, beispielsweise eine Vollkrone, optimal gestaltet werden. Insbesondere kann die Zusammensetzung hinsichtlich Dentin- und Transparenzmaterial, Farbe und Farbverlauf sowie der Lage von Einschlüssen vorgegeben werden.

Das Werkstück 36 in Figur 9 wird von einem sich vorzugsweise in senkrechter Richtung erstreckenden Werkstückhalter 37 getragen. Die beiden Sonotroden 33, 35 werden nacheinander auf das Werkstück 36 zu bewegt. Das Führen dieser Bewegungen 38, 39 erfolgt vorzugsweise in horizontaler Richtung. Die erste Sonotrode 33 ist, wie schon in Figur 5 dargestellt, im wesentlichen stempelförmig ausgebildet. Ihr formgebender Bereich 23 natürlich ist, dem Negativ der gewünschten Restauration 12a entsprechend, hohl. Die zweite Sonotrode 35 dagegen ist, wie auch schon in Figur 7 gezeigt, schüsselförmig ausgebildet, wobei ihr formgebender Bereich 23 ebenfalls hohl ist. Die Seitenflächen 26 der Sonotroden 33 und 35 verlaufen parallel zu den Bewegungsrichtungen 38, 39. Der Außendurchmesser der Seitenfläche 26 der ersten Sonotrode 33 ist etwas kleiner als der Innendurchmesser der Seitenfläche 26 der zweiten Sonotrode 35. Dadurch läßt sich die Sonotrode 33 formschlüssig in die Sonotrode 35 einführen, und dies ermöglicht die Herstellung eines dreidimensionalen Paßkörpers 12a aus einem Werkstuck 36 praktisch in höchstens zwei Arbeitsgängen. Die Seitenflächen 26 übernehmen bei der Sonoerosion die grobe Führung, die Paßstifte 24 und die Löcher 28 die feine Führung.

Zunächst wird die erste Sonotrode 33 auf das Werkstück 36 zu gefahren. So lange die Sonotrode 33 schwingt, wird zwischen das Werkstück 36 und die Schicht 31 ein geeignetes Schleifmittel eingeführt. Wenn die Sonotrode 33 den Teil des Paßkörpers, den sie zu bearbeiten hat, fertiggestellt hat, wird der Werkstückhalter 37 vom Werkstück 36 gelöst und das teilbearbeitete Werkstück 36 in die Mulde 23 der Sonotrode 33 gelegt. Danach wird die zweite Sonotrode 35 auf das Werkstück 36 - wieder unter Zwischenschaltung eines geeigneten Schleifmittels - gesetzt und der restliche Teil des gewünschten Paßkörpers 12a herausgearbeitet.

Im Interesse einer hohen Oberflächengüte kann es zweckmäßig sein, das Werkstück 36 erst mit Schleifmittel, das grobes Korn enthält, zu behandeln und dann zum Erzielen einer Präzisionsoberfläche mit einem feinen Schleifmittel nachzuarbeiten. Aus Gründen der Zweckmäßigkeit könnte es auch geboten sein, die Bewegungsrichtungen 38, 39 vertikal verlaufen zu lassen.

## Patentansprüche

1. Verfahren zur Herstellung einer Zahnrestauration (12) durch Ultraschallbearbeitung eines Werkstücks (36) mit Hilfe zweier Sonotroden (33, 35) mit bearbeitenden Werkzeugkronen (32), bei dem eine das Werkstück (36) von der Zahnstumpfseite bearbeitende Sonotrode (33) sowie eine das Werkstück (36) von der Okklusalseite bearbeitende Sonotrode (35) hergestellt wird, und das Werkstück (36) in einem ersten Arbeitsgang von der ersten Sonotrode (33, 35) bearbeitet und dabei von einem Werkstückhalter (37) gehalten wird und in einem zweiten Arbeitsgang von der zweiten Sonotrode (35, 33) fertig bearbeitet wird, wobei das Werkstück (36) von der ersten Sonotrode (33, 35) gehalten wird, **dadurch gekennzeichnet**, daß die Sonotroden (33, 35) ihre Stirnflächen begrenzende Seitenflächen (26) umfassen, die als Führungsflächen dienen, wobei die gesamten Stirnflächen der Sonotroden (33, 35) zur Bearbeitung des Werkstücks (36) verwendbar sind, und die Zahnrestauration (12) allseitig einschließlich der Okklusionsfläche durch Bearbeiten eines beliebig geformten Werkstücks (36) aus dem Vollen heraus geformt wird.

2. Verfahren nach Anspruch 1, gekennzeichnet durch die Verwendung von Sonotroden (33, 35), deren Sonotrodenkörper (29) aus einem plastisch verformbaren und danach härtbaren oder härtendem Werkstoff besteht, der nach dem Aushärten selbst hart und verschleißfest ist.

3. Verfahren nach einem der vorhergehenden Ansprüche, dadurch gekennzeichnet, daß von einem Werkstück (36) mit Schichten aus unterschiedlichem Material, insbesondere Keramikmaterial, mit vorgebbaren technischen Kennwerten ausgegangen wird.

4. Verfahren nach Anspruch 3, dadurch gekennzeichnet, daß ein Werkstück (36) mit Schichten aus Dentin- und Transparentmaterial verwendet wird.

5. Verfahren nach Anspruch 4, dadurch gekennzeichnet, daß von Schichten mit eingearbeiteten Einschlüssen und Farbverläufen in vorgegebenem Maß ausgegangen wird.

6. Verfahren nach Anspruch 1, dadurch gekennzeichnet, daß die Sonotroden (33, 35) mit einer harten, verschleißfesten Schicht versehen werden oder aus einem harten und verschleißfesten Material bestehen.

## Claims

1. A method of producing a dental restoration (12) by ultrasonic working using two sonotrodes (33, 35) having working workpiece crowns (32), wherein one sonotrode (33) which works the workpiece (36) from the stump side and one sonotrode (35) which works the workpiece (36) from the occlusal side are produced, and the workpiece (36) is worked in a first process step by the first sonotrode (33, 35) while held by a workpiece holder (37) and is finished in a second process step by the second sonotrode (35, 33) while held by the first sonotrode (33, 35), **characterised** in that the sonotrodes (33, 35) have lateral surfaces (26) which confine their end faces and serve as guiding surfaces, wherein the entire end faces of the sonotrodes (33, 35) are adapted for working the workpiece (36), and the tooth restoration (12) is cut, on all sides including the occlusal face, from the solid by working a workpiece (36) of any desired shape.

2. The method of claim 1, characterised in that sonotrodes (33, 35) are used the sonotrode bodies (29) of which consist of a material which permits plastic deformation, which subsequently permits curing or subsequently cures, and which upon curing is itself hard and wear-resistant.

3. The method of any preceding claim, characterised in that one starts from a workpiece (36) having layers of different, specifically ceramic, materials of technical characteristics that may be set in advance.

4. The method of claim 3, characterised in that a workpiece (36) having layers of dentine and transparent material is used.

5. The method of claim 4, characterised in that layers are used which have a predetermined amount of inclusions and colour transitions.

6. The method of claim 1, characterised in that the sonotrodes (33, 35) are provided with a hard, wear-resistant layer or consist of a hard and wear-resistant material.

## Revendications

1. Procédé de préparation d'une restauration dentaire (12) par usinage par ultrasons d'une pièce (36) à l'aide de deux sonotrodes (33, 35) avec des couronnes-outils d'usinage (32), dans lequel sont réalisées une sonotrode (33) qui usine la pièce (36) à partir du côté chicot ainsi qu'une sonotrode (35) qui usine la pièce (36) à partir du côté occlusion, et dans lequel la pièce (36) maintenue par un porte-pièce (37) est usinée, dans une première phase, par la première sonotrode (33, 35) et finie, dans une deuxième phase, par la seconde sonotrode (35, 33), avec maintien de la pièce (36) par la première sonotrode (33, 35), **caractérisé en ce** que les sonotrodes (33, 35) présentent des surfaces latérales (26) qui délimitent leurs surfaces frontales et servent de surfaces de guidage, la totalité des surfaces frontales des sonotrodes (33, 35) pouvant être utilisée pour l'usinage de la pièce (36) et la restauration dentaire (12) étant formée de tous côtés, y compris la surface d'occlusion, par façonnage dans la masse d'une pièce (36) de forme quelconque.

2. Procédé selon la revendication 1, caractérisé par l'utilisation de sonotrodes (33, 35) dont le corps (29) est constitué d'un matériau élastiquement déformable, puis durcissable ou durcissant qui, après le durcissement, est lui-même dur et résistant à l'usure.

3. Procédé selon l'une des revendications précédentes, caractérisé en ce qu'il part d'une pièce (36) comportant des couches de différents matériaux, en particulier de matériaux céramiques, dont les paramètres techniques peuvent être prédéterminés.

4. Procédé selon la revendication 3, caractérisé en ce qu'il utilise une pièce (36) comportant des couches de matériau dentinaire et transparent.

5. Procédé selon la revendication 4, caractérisé en ce qu'il part de couches avec des inclusions incorporées et des dégradés de couleurs prédéterminés.

6. Procédé selon la revendication 1, caractérisé en ce que les sonotrodes (33, 35) sont munies d'une couche dure et résistant à l'usure ou qu'elles sont constituées par un matériau dur et résistant à l'usure.
